Europäisches Patentamt

**(19)** European Patent Office

Office européen des brevets

**(11)** Publication number: **0 073 666**

**B1**

**(12)** EUROPEAN PATENT SPECIFICATION

**(45)** Date of publication of patent specification: **28.10.87**

**(51)** Int. Cl.⁴: **G 06 F 12/12,** G 06 F 11/20

**(21)** Application number: **82304537.2**

**(22)** Date of filing: **27.08.82**

---

**(54)** Error processing system for buffer store.

---

**(30)** Priority: **27.08.81 JP 134572/81**

**(43)** Date of publication of application:
**09.03.83 Bulletin 83/10**

**(45)** Publication of the grant of the patent:
**28.10.87 Bulletin 87/44**

**(84)** Designated Contracting States:
**DE FR GB**

**(56)** References cited:
**EP-A-0 009 412**
**US-A-3 588 829**
**US-A-3 958 228**

**IBM TECHNICAL DISCLOSURE BULLETIN, vol.
17, no. 7, December 1974, pages 2038-2039,
New York, US T.P. AHEARN et al.: "Automatic
partial deletion of high-speed buffer entries"**

**IBM TECHNICAL DISLCOSURE BULLETIN, vol.
12, no. 12, May 1970, pages 2150-2151, New
York, US E.L. ALLEN Jr. et al.: "Logical deletion
of portions of a push-down algorithm"**

**(73)** Proprietor: **FUJITSU LIMITED
1015, Kamikodanaka Nakahara-ku
Kawasaki-shi Kanagawa 211 (JP)**

**(72)** Inventor: **Takahashi, Masanori
5-31-6, Higashi-Nippori Arakawa-ku
Tokyo 116 (JP)**
Inventor: **Tateishi, Terutaka
3751, Suge Tama-ku
Kawasaki-shi Kanagawa, 214 (JP)**

**(74)** Representative: **Sunderland, James Harry et al
HASELTINE LAKE & CO Hazlitt House
28 Southampton Buildings Chancery Lane
London WC2A 1AT (GB)**

Courier Press, Leamington Spa, England.

## Description

The present invention relates to a buffer store which performs replacement processing on the basis of the LRU (Least Recently Used) system and, more particularly, to an error processing system for a buffer store which permits the determination of a block to be replaced even if an error occurs in an LRU circuit.

The LRU systems function is to replace the least recently used data by moving data, read out from a main store and stored in a buffer store, out of the buffer store to the main store, whereby data of the highest frequency of use can be held in the buffer store at all times.

In a buffer store employing such an LRU system a unit of data, or a block, to be replaced is usually determined in the following manner: An LRU circuit outputs, as an LRU pattern, information for use in determining the block to be replaced, and a replace logic circuit decodes each bit of the LRU information on the basis of a predetermined replace algorithm and yields an output for designating a single block to be replaced. On the other hand, an update logic circuit determines the order in which blocks were newly used, thereby to update the LRU pattern in the LRU circuit to ensure that the LRU pattern can always hold information on the block to be replaced. This is based on the assumption that the previously most used block would, in general, be the last one used, whereby data of the highest frequency of use can always be found loaded in the buffer store.

A more complete description of a buffer store employing such an LRU algorithm for replacement purposes can be f●nd in US—A—3 588 829.

In a case in which a fixed or intermittent fault occurs in the LRU circuit, causing that circuit to generate an LRU pattern other than a predetermined one, the replace algorithm in the replace logic circuit will not be effected normally, with the result that no output is produced by the replace logic circuit for designating the block to be ·replaced. Such an error is a serious fault in a buffer store using the swap system in which update of data in the main store is carried out only in respect of data loaded in the buffer store. The reason is that with the swap system the opportunity to update data in the main store is lost in the presence of such an error, unlike the case with a store-through system in which the same data loaded in the buffer store and the main store are simultaneously updated. ·

As a solution to this problem, duplication of the LRU circuit has been considered; this almost certainly prevents the failure of the system but increases the amount of hardware used, resulting in increased manufacturing costs.

US—A—3 958 228 discloses a buffer store system in which replacement is determined on the basis of LRU logic. If a section of the buffer store is faulty, so that normal LRU logic (VALID LRU DECODER) provides an invalid LRU chronology bit combination for designating the sequence of use of the sections of the buffer store, the invalid bit combination is detected (LRU ERROR DECODER) and failure mode LRU logic (FAILURE MODE LRU DECODER) is then employed to determine replacement.

According to the present invention there is provided an error processing system for a buffer store for storing some blocks of data of a main store, having replace block designating means for designating a buffer store block to be replaced on the basis of least-recently-used logic, the error processing system comprising:

error detecting means for detecting an error, when the replace block designating means fails to produce an output for designating a block to be replaced;

and further comprising:

recovery logic means for designating a block to be replaced on a basis not involving an additional least-recently-used logic, operable to designate a predetermined block to be replaced in response to detection of an error by the error detecting means.

In one embodiment of the present invention the recovery logic means designate the block to be replaced by selecting the lowest numbered block of the buffer store which has not been deleted.

In another embodiment the recovery logic means designate the block to be replaced by selecting the block designated for replacement immediately before detection of an error.

An embodiment of the present invention provides an error processing system for a buffer store using the LRU system which prevents system failure resulting from LRU error.

An embodiment of the present invention provides an error processing system for a buffer store which can be implemented by the addition of a circuit arangement which involves less hardware than is required for duplicating the LRU circuit.

An embodiment of the present invention provides an error processing system for a buffer store which can be obtained at lower cost than is the case when duplicating the LRU circuit.

Reference is made, by way of example, to the accompanying drawings, in which:—

Figure 1 is a block diagram illustrating the arrangement of an error processing system for a buffer store, according to an embodiment of the present invention;

Figure 2 is a diagram explanatory of a buffer store of a set associative system;

Figure 3 is a diagram showing an example of an LRU pattern;

Figures 4A to 4D are diagrams explanatory of an LRU pattern updating method;

Figure 5 is a diagram showing an example of recovery logic;

Figures 6A to 6D are diagrams illustrating, by way of example, the arrangement of replace logic circuitry;

Figure 7 is a diagram showing an example of the arrangement of an error check circuit;

Figure 8 is a diagram illustrating an example of the arrangement of a recovery logic circuit;

Figure 9 is a diagram showing an examp;le of a selector; and

Figure 10 is a block diagram illustrating the principal part of another embodiment of the error processing system for a buffer store according to the present invention.

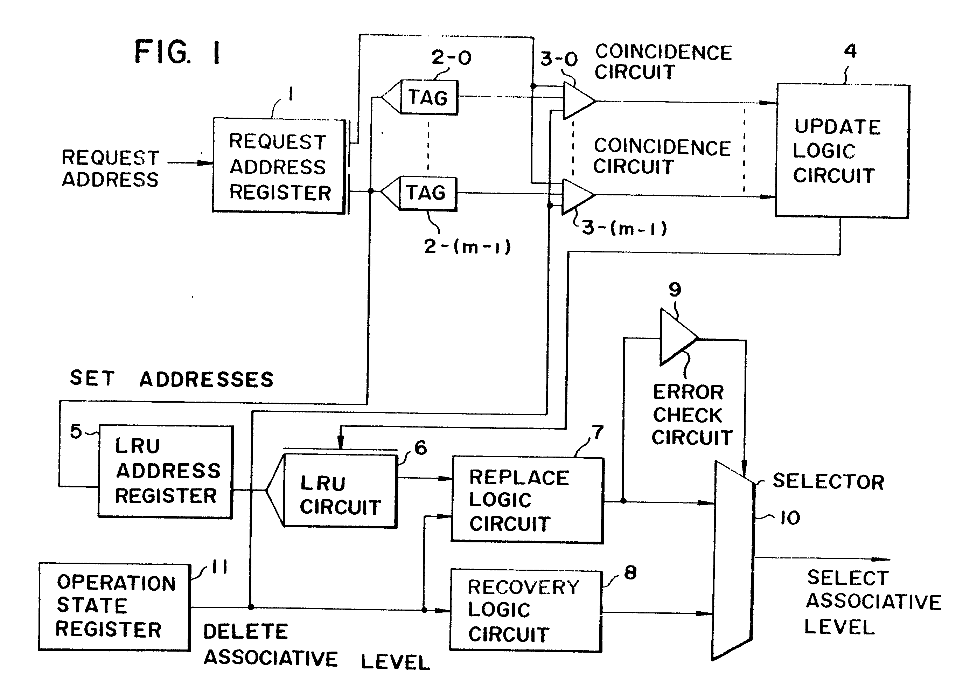

In Figure 1, 1 is a request address register; 2-0 to 2-(m−1) are tag portions; 3-0 to 3-(m−1) are coincidence circuits; 4 is an update logic circuit; 5 is an LRU address register; 6 is an LRU circuit; 7 is a replace logic circuit; 8 is a recovery logic circuit; 9 is an error check circuit; 10 is a selector; and 11 is an operation state register.

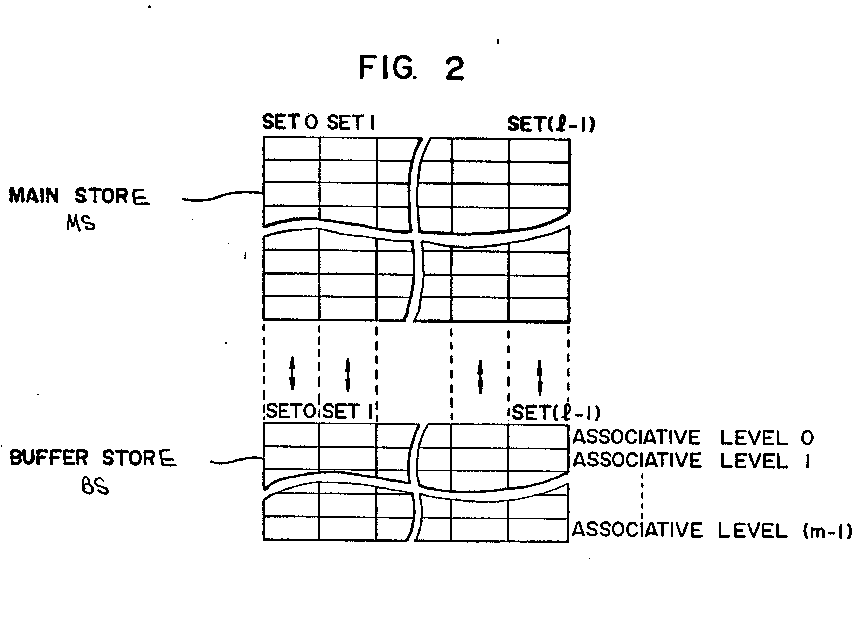

In Figure 2, MS is a main store, and BS is a buffer store. The main store MS and the buffer store BS are shown each to comprise l segments in the column direction, and these segments will hereinafter be referred to as sets 0,1,...,(l−1), respectively. In the row direction the main store MS will have many segments but the buffer store usually has only a small number of segments. In Figure 2 the buffer store is shown to have m segments in the row direction and in the following the m segments of the buffer store BS will be referred to as associative levels 0,1,...(m−1), respectively. The individual segments thus defined in the main store MS and the buffer store BS (the individual parts in the main store and the buffer store at the intersections of column direction segments and row direction segments) will hereinafter be referred to as blocks. The set associative system involves the performance of storage and replacement of data between the blocks of the same set of the main store MS and the buffer store BS when executing a program.

When a request for access is applied from a processor or the like to the buffer store BS, a request address corresponding to the data to be accessed is set in the request address register 1. The request address consists of a high-order address and a low-order address, the former corresponding to the segment or row number in the row direction in the main store MS (of the data to be accessed) and the latter the number of the set (of the data to be accessed). The high-order address in the register 1 is provided to the coincidence circuits 3-0 to 3-(m−1) and the low-order address is input to the tag portions 2-0 to 2-(m−1). The tag portions 2-0 to 2-(m−1) are provided corresponding to the associative levels 0 to (m−1) in the buffer store BS, and each stores the addresses of all data (each given the same address as in the main store MS) stored in the buffer store BS at the corresponding level and, when retrieved by a set address (primarily the low order address of the request address set in request address register), outputs the high-order address of the block concerned (a block having the same low order address as the set address). The coincidence circuits 3-0 to 3-(m−1) each generate a tag coincidence signal when the high-order address input thereto from the tag portion corresponding thereto and the high-order address from the request address register 1 coincide with each other and, by the tag coincidence signal, the block concerned in the buffer store is accessed.

When any one of the coincidence circuits 3-0 to 3-(m−1) outputs a tag coincidence signal, the update ligic circuit 4 yields update information which indicates the chronology in the order of storage of data stored in the set concerned in the buffer store BS. The update inforamtion generated by the update logic circuit is provided to the LRU circuit 6. The LRU circuit 6 has stored therein LRU information indicating the order of storage of the data in each block belonging to the set, that is, an LRU pattern and, upon each application of the update information from the update logic circuit 4, the LUR pattern relating to the set concerned is rewritten.

In a case in which no corresponding address exists in the tag portions 2-0 to 2-(m-1) and thus no tag coincidence signal is produced, the set address in the request address register 1 (the low order address of the request address corresponds to the number of the set, as mentioned above) is set in the LRU address register 5, from which it is provided to the LRU circuit 6, thereby reading out the LRU information of the set concerned. The LRU information thus read out is applied to the replace logic circuit 7, which in turn selects, based on the LRU information and delete associative level information, a single undeleted block to be replaced and outputs via the selector 10 the information as a select associative level, replacing data of the block concerned in the buffer store BS.

Delete associative level information is provided when the stored content of ths store (BS) or the tag portion is subject to a fixed fault and the content of the block concerned is unusable, and the delete associative information is intended to delete the data of the block. This information is input from the operation state register 11. To each of the coincidence circuits 3-0 to 3-(m−1) is applied the delete associative level information of the level corresponding thereto and when the information is at 0, the generation of the tag coincidence signal is inhibited.

When an associative level of store, or a tag portion corresponding to the associative level, is subject to a fault, delete associative level information indicates this and prevents the generation of a tag coincidence signal which would indicate that data desired to be accessed is in buffer store.

Replace logic in the replace logic circuit 7 in this case is determined in the manner described below.

Assuming that the temporal relationship between associative levels $i$ and $j$ (where $j>i$) which each bit of the LRU pattern indicates is represented by $Lij=1$ or $Lij=0$ depending whether the level $i$ is earlier than (was last accessed before) the level $j$ or not ($Lij=1$ if level $i$ was most recently accessed), the temporal relationship between the associative levels $i$ and $j$ represented by a bit $LDij$ taking into account the condition for deletion is determined by the following expression:

$$LDii = Lij \cdot \overline{DELETEj} + DELETEi \quad (1)$$

where DELETEi and DELETEj indicate whether the associative levels i and j are deleted or not and let it be assumed that they take a value "1" or "0" depending whether the levels are deleted or not. Assuming that the number of associative levels m=4, that is, i, j=0 to 3, the following expressions are used to determine whether the associative levels 0 to 3 are to be subject to replacement:

$$REPLACE\ 0 = \overline{LD_{01}} \cdot \overline{LD_{02}} \cdot \overline{LD_{03}}$$

$$REPLACE\ 1 = LD_{01} \cdot \overline{LD_{12}} \cdot \overline{LD_{13}} \quad (2)$$

$$REPLACE\ 2 = LD_{02} \cdot LD_{12} \cdot \overline{LD_{23}}$$

$$REPLACE\ 3 = LD_{03} \cdot LD_{13} \cdot LD_{23}$$

In the above expression, when the value of the left side is 1, it indicates that the associative level is to be subject to replacement, and when the value is 0, the associative level is not to be subject to replacement.

In the case where the replace logic circuit 7 has a fault and does not generate the output indicating the level to be subject to replacement, the error check circuit 9 detects this state and instructs the selector 10 to select the output from the recovery logic circuit 8. The recovery logic circuit 8 determines, based on the delete associative level information, one of the undeleted blocks and outputs the information, as a select associative level via the selector 10. By this, even if the replace logic circuit 7 has a fault, replacement can be effected in the buffer store BS. The method of recovery is optional; for example, it is possible to employ such logic selecting a level of the lowest number among the associative levels belonging to the same set, excluding deleted levels.

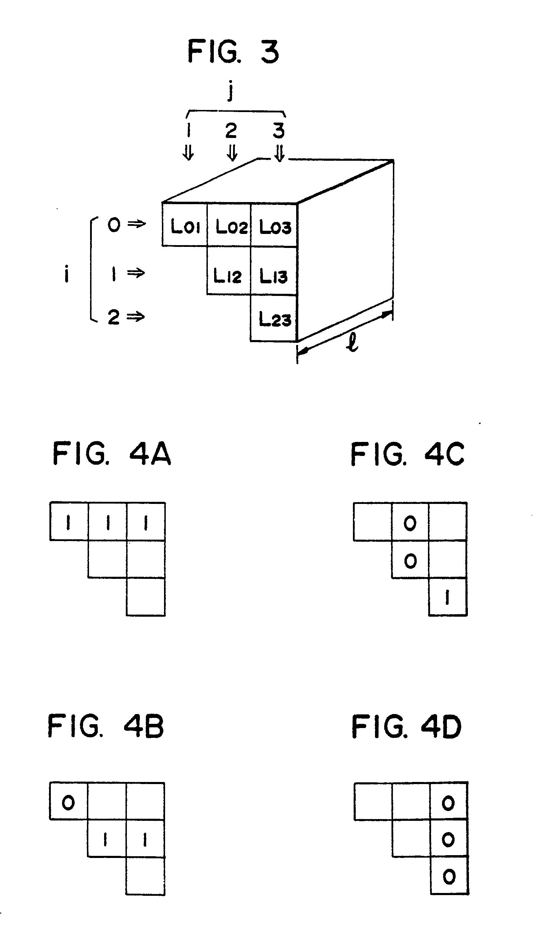

Figure 3 shows, by way of example, the contents of an LRU pattern provided in relation to the above-described embodiment of the present invention with regard to a case in which the number of associative levels m is four. In Figure 3, reference characters $L_{01}$, $L_{02}$, $L_{03}$, $L_{12}$, $L_{13}$ and $L_{23}$ indicate six-bit information corresponding to each bit Lij (where i, j=0 to 3, i<j) of the LRU pattern. The LRU circuit 6 in Figure 1 has stored therein such LRU patterns for each set of l sets.

Figures 4A to 4D are explanatory of a method for updating the LRU pattern shown in Figure 3, each section showing the same bits as in Figure 3. Figure 4A shows a method for updating the pattern so that the associative level 0 may be indicated as the latest regardless of the other levels in the case where the associative level 0 is the most recently referred data (holds the most recently accessed data). Similarly, Figures 4B to 4D indicate patterns which indicate respectively levels 1, 2 and 3 as the latest (the most recently accessed).

In Figure 4A, $L_{01}=L_{02}=L_{03}=1$, thereby indicating that level 0 was more recently referred to than any of levels 1, 2 and 3.

In Figure 4B, $L_{01}=0$ thereby indicating that level 0 was less recently referred to than level 1 (i.e. level 1 was more recently referred to than level 0) and $L_{12}=L_{13}=1$ thereby indicating that level 1 was more recently referred to than level 2 or level 3.

Similarly Figures 4C and 4D, respectively show levels 2 and 3 to be most recently referred to.

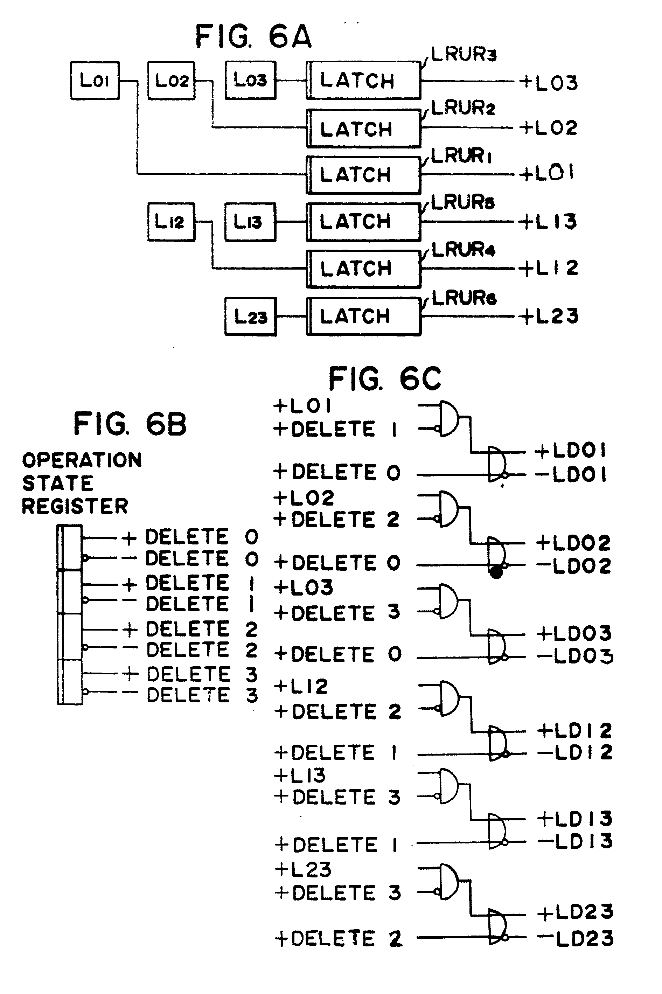

Figure 5 shows an example of recovery logic, in which DELETE 0 to DELETE 3 respectively indicate the conditions whether the associative levels 0 to 3 are deleted or not, 0 indicating that the level is not deleted, and 1 indicating that the level is deleted. RECOVER ASS 0 to 3 show instructions for the associative levels to be replaced and a value 1 indicates that the level is replaced and a value 0 indicates that the level is not replaced.

Figures 6A to 6D illustrate replace logic circuits for executing the replace logic shown by Eqs. (1) and (2).

In Figure 6A, reference characters $LRUR_1$ to $LRUR_6$ identify latch circuits which latch up the bits $L_{01}$, $L_{02}$, $L_{03}$, $L_{12}$, $L_{13}$ and $L_{23}$ of the LRU pattern of six bits and yield latch outputs +L01, +L02, +L03, +L12, +L13 and +L23, respectively.

In Figure 6B, an operation state register is shown which is the same as that (11) used in Figure 1 and, at the start of the system, receives delete associative level inputs corresponding to the m associative levels and holds them and generates delete associative level information DELETE 0 to 3. Each delete associative level information DELETE 0 to 3 is provided as a signal having a sign+ or − depending on whether the level concerned is deleted or not.

In Figure 6C there are shown circuits which execute the operation of Eq. (1) using each bit of the LRU pattern information and the delete associative level information to yield bits LD01, LD02, LD03, LD12, LD13 and LD23 taking into account the condition for deletion. Each of these bits takes the form of a signal having a sign + or − corresponding to its value 1 or 0.

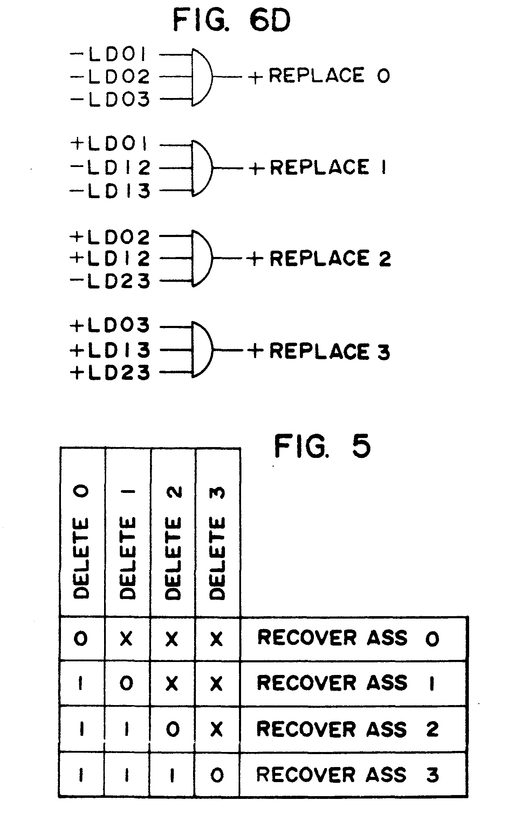

Figure 6D illustrates circuits which execute the operation of Eq. (2) using each bit of the LRU pattern information (i.e. bits LD01 to LD23) and generate outputs +REPLACE 0 to 3 which indicate that the respective levels are to be subject to replacement.

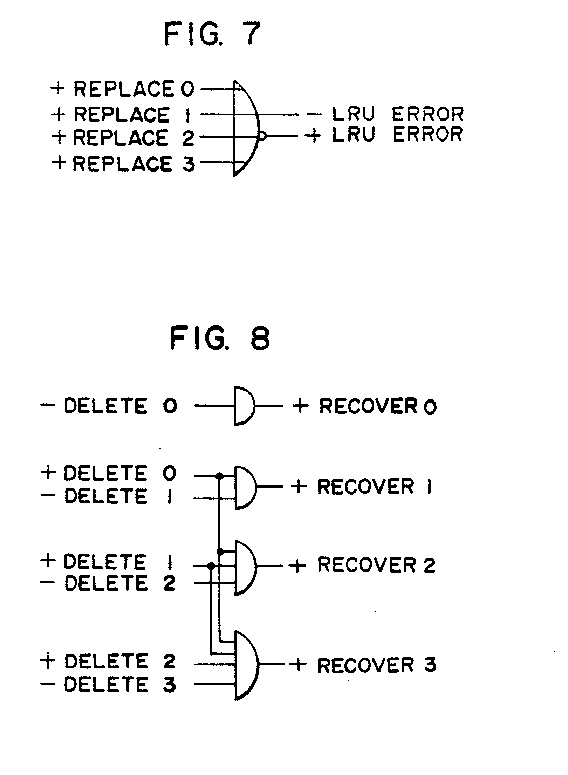

Figure 7 illustrates, by way of example, the arrangement of the error check circuit 9, which produces an output −LRU ERROR indicating the absence of an error when the replace logic circuit 7 yields any one of the outputs +REPLACE 0 to 3, and produces an output +LRU ERROR indicating the presence of an error when none of the outputs +REPLACE 0 to 3 are provided.

Figure 8 illustrates an example of the arrangement of the recovery logic circuit 8 for executing the recovery logic shown in Figure 5. The recovery logic circuit 8 generates, based on the delete associative level information from the operation state register shown in Figure 6B, outputs +RECOVER 0 to 3 indicating the levels to be subject to replacement.

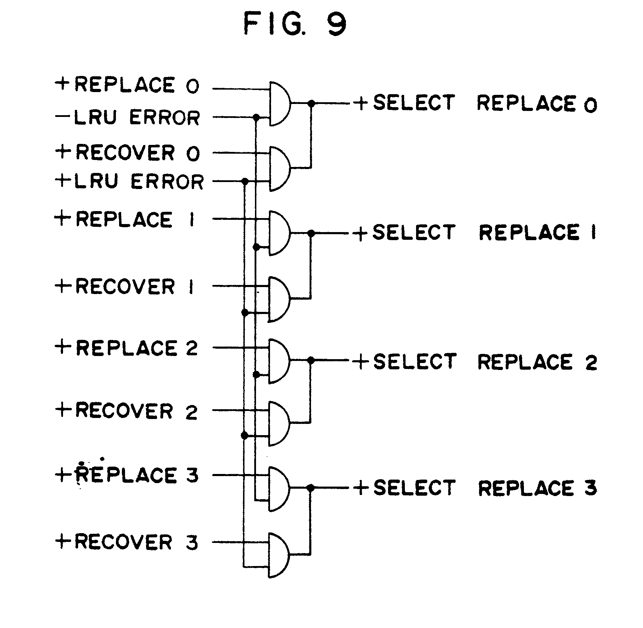

Figure 9 illustrates, by way of example, the arrangement of the selector 10, which receives the outputs +REPLACE 0 to 3 from the replace logic circuit 7, the outputs +RECOVER 0 to 3 from the recovery logic circuit 8 and the outputs +LRU ERROR and −LRU ERROR from the error check circuit 9. Depending on whether an error is present in the LRU circuit 6 or not, the selector 10 selects any one of the outputs +REPLACE 0 to 3 or +RECOVER 0 to 3 and provides a corresponding one of outputs +SELECT REPLACE 0 to 3.

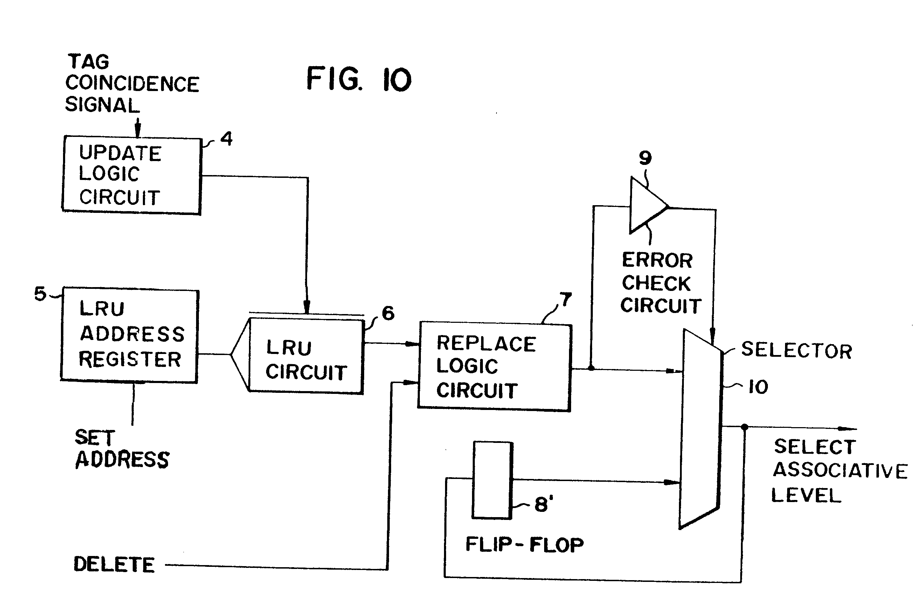

Figure 10 illustrates principal parts of another embodiment of the present invention, which employs recovery logic different from that used in the embodiment of Figure 1. In Figure 10 parts corresponding to parts shown in Figure 1 are identified by the same reference numerals. 8' is a flip-flop. When no error occurs in the LRU circuit 6, the operation of the embodiment of Figure 10 is the same as in the case of Figure 1 and the selector 10 selects the output from the replace logic circuit 7 and outputs it as a select associative level. The flip-flop 8' is set by the output from the selector 10 and held in the set state. When the error check circuit 9 detects an error, the selector 10 is changed over by the output from the error check circuit 9 to select the output from the flip-flop 8' instead of the output from the replace logic circuit 7. As a result of this, the select associative level immediately before the occurrence of the error, stored in the flip-flop 8' is output without interruption.

The error processing system of the present invention is generally usable not only for a buffer store using the swap system, copying a portion of information of a main store for use in the buffer store, but also for a buffer store using the store through system.

## Claims

1. An error processing system for a buffer store (BS) for storing same blocks of data of a main store (MS), having replace block designating means (4, 5, 6, 7) for designating a buffer store block to be replaced on the basis of least-recently-used logic (LRU), the error processing system comprising:
   error detecting means (9) for detecting an error, when the replace block designating means (4, 5, 6, 7) fails to produce an output for designating a block to be replaced;
   and further comprising:
   recovery logic means (8, 8') for designating a block to be replaced on a basis not involving an additional least-recently-used logic, operable to designate a predetermined block to be replaced in response to detection of an error by the error detecting means (9).

2. A system as claimed in claim 1, wherein the least-recently-used logic (LRU) is executed with the exclusion of any deleted block.

3. A system as claimed in claim 1 or 2, wherein the recovery logic means (8) is operable on the basis of logic which designates as the block to be replaced the block whose level is the lowest numbered level among the associative levels of the system.

4. A system as claimed in claim 3, wherein the logic of the recovery logic means (8) is executed with the exclusion of any deleted block.

5. A system as claimed in claim 1 or 2, wherein the recovery logic means (8') designates as the block to be replaced the block designated immediately before detection of an error by the error detecting means (9).

## Patentansprüche

1. Fehlerverarbeitungssystem für einen Pufferspeicher (BS) zum Speichern einiger Blöcke von Daten eines Hauptspeichers (MS) mit einer Austauschblock-Bestimmungseinrichtung (4, 5, 6, 7) zum Bestimmen eines Pufferspeicherblocks, der auf der Basis der LRU-Logik (LRU) ersetzt werden soll, welches Fehlerverarbeitungssystem umfaßt:
   eine Fehlerdetektoreinrichtung (9) zum Detektieren eines Fehlers, wenn die Austauschblock-Bestimmungseinrichtung (4, 5, 6, 7) versagt, einen Ausgang zur Bestimmung eines auszutauschenden Blockes zu erzeugen;
   und ferner umfaßt:
   eine Wiederherstellungslogikeinrichtung (8, 8') zur Bestimmung eines auszutauschenden Blockes auf der Basis der Nichtverwendung einer zusätzlichen LRU-Logik, die betreibbar ist, um einen vorbestimmten Block zu bestimmen, der in Abhängigkeit von der Detektion eines Fehlers durch die Fehlerdetektoreinrichtung (9) ausgetauscht werden soll.

2. System nach Anspruch 1, bei dem die LRU-Logik (LRU) unter Ausschluß irgendwelcher zerstorter Blöcke ausgeführt wird.

3. System nach Anspruch 1 oder 2, bei dem die Wiederherstellungslogikeinrichtung (8) auf der Basis der Logik betreibbar ist, die als auszutauschenden Block den Block bestimmt, dessen Pegel der am niedrigsten nummerierte Pegel unter den assoziativen Pegeln des Systems ist.

4. System nach Anspruch 3, bei dem die Logik der Wiederherstellungslogikeinrichtung (8) unter Ausschluß irgendeines zerstörten Blockes ausgeführt wird.

5. System nach Anspruch 1 oder 2, bei dem die Wiederherstellungslogikeinrichtung (8') als auszutauschenden Block den Block bestimmt, der unmittelbar vor der Detektion eines Fehlers durch die Fehlerdetektoreinrichtung (9) bestimmt ist.

## Revendications

1. Système de traitement d'erreur pour une mémoire tampon (BS) servant à mémoriser certains blocs de données d'une mémoire centrale (MS), comportant un moyen d'indication de bloc de remplacement (4, 5, 6, 7) pour indiquer un bloc de mémoire tampon à remplacer selon une logique du moins récemment utilisé (LRU), le système de traitement d'erreur comprenant:
   un moyen de détection d'erreur (9) pour détecter une erreur, quand le moyen d'indication de bloc de remplacement (4, 5, 6, 7) ne parvient pas à produire une information de sortie pour indiquer un bloc à remplacer;

et comprenant en outre;

un moyen logique de reprise (8, 8') pour indiquer un bloc à remplacer sur une base n'impliquant pas une logique du moins récemment utilisé supplémentaire, pouvant fonctionner pour indiquer un bloc prédéterminé à remplacer en réponse à la détection d'une erreur par le moyen de détection d'erreur (9).

2. Système selon la revendication 1, dans lequel la logique du moins récemment utilisé (LRU) est mise en oeuvre avec l'exclusion de tout bloc éliminé.

3. Système selon l'une quelconque des revendications 1 et 2, dans lequel le moyen logique de reprise (8) peut fonctionner selon une logique qui indique comme bloc à remplacer le bloc dont le niveau est le niveau de numéro le plus bas parmi les niveaux associatifs du système.

4. Système selon la revendication 3, dans lequel la logique du moyen logique de reprise (8) est mise en oeuvre avec l'exclusion de tout bloc éliminé.

5. Système selon l'une quelconque des revendications 1 et 2, dans lequel le moyen logique de reprise (8') indique comme bloc à remplacer le bloc indiqué juste avant la détection d'une erreur par le moyen de détection d'erreur (9).

FIG. 1

REQUEST ADDRESS → REQUEST ADDRESS REGISTER (1)

2-0 TAG
2-(m-1) TAG

3-0 COINCIDENCE CIRCUIT
COINCIDENCE CIRCUIT
3-(m-1)

UPDATE LOGIC CIRCUIT (4)

SET ADDRESSES

5 — LRU ADDRESS REGISTER

6 LRU CIRCUIT

7 REPLACE LOGIC CIRCUIT

9 ERROR CHECK CIRCUIT

SELECTOR 10

OPERATION STATE REGISTER (11)

DELETE ASSOCIATIVE LEVEL

8 RECOVERY LOGIC CIRCUIT

SELECT ASSOCIATIVE LEVEL

0 073 666

# FIG. 2

**MAIN STORE
MS**

SET O  SET I                      SET($\ell$-1)

**BUFFER STORE
BS**

SET O  SET I              SET($\ell$-1)

ASSOCIATIVE LEVEL O
ASSOCIATIVE LEVEL I

ASSOCIATIVE LEVEL (m-1)

# FIG. 3

# FIG. 4A

# FIG. 4C

# FIG. 4B

# FIG. 4D

0 073 666

FIG. 6A

FIG. 6B

OPERATION
STATE
REGISTER

FIG. 6C

4

# FIG. 6D

-LD01 ─┐
-LD02 ─┤ ⊃── +REPLACE 0
-LD03 ─┘

+LD01 ─┐
-LD12 ─┤ ⊃── +REPLACE 1
-LD13 ─┘

+LD02 ─┐
+LD12 ─┤ ⊃── +REPLACE 2
-LD23 ─┘

+LD03 ─┐
+LD13 ─┤ ⊃── +REPLACE 3
+LD23 ─┘

# FIG. 5

| DELETE 0 | DELETE 1 | DELETE 2 | DELETE 3 | |
|----------|----------|----------|----------|---|
| 0 | X | X | X | RECOVER ASS 0 |
| 1 | 0 | X | X | RECOVER ASS 1 |
| 1 | 1 | 0 | X | RECOVER ASS 2 |
| 1 | 1 | 1 | 0 | RECOVER ASS 3 |

# FIG. 7

+ REPLACE 0 ——
+ REPLACE 1 —— —— — LRU ERROR
+ REPLACE 2 —— —— + LRU ERROR
+ REPLACE 3 ——

# FIG. 8

− DELETE 0 ——— + RECOVER 0

+ DELETE 0 ——
− DELETE 1 —— —— + RECOVER 1

+ DELETE 1 ——
− DELETE 2 —— —— + RECOVER 2

+ DELETE 2 ——
− DELETE 3 —— —— + RECOVER 3

# FIG. 9

+ REPLACE 0 ——

— LRU ERROR ——

                  + SELECT  REPLACE 0

+ RECOVER 0 ——

+ LRU ERROR ——

+ REPLACE 1 ——

                  + SELECT  REPLACE 1

+ RECOVER 1 ——

+ REPLACE 2 ——

                  + SELECT  REPLACE 2

+ RECOVER 2 ——

+ REPLACE 3 ——

                  + SELECT  REPLACE 3

+ RECOVER 3 ——

FIG. IO

TAG
COINCIDENCE
SIGNAL

UPDATE
LOGIC
CIRCUIT — 4

LRU
ADDRESS
REGISTER — 5

SET
ADDRESS

LRU
CIRCUIT — 6

REPLACE
LOGIC
CIRCUIT — 7

ERROR
CHECK
CIRCUIT — 9

SELECTOR — 10

SELECT
ASSOCIATIVE
LEVEL

FLIP-FLOP — 8'

DELETE

0 073 666

8